# EUROPEAN PATENT SPECIFICATION

(11) **EP 2 055 522 B1**
(45) Date of publication and mention of the grant of the patent: **26.01.2011**
(21) Application number: 07425694.2
(22) Date of filing: 05.11.2007
(51) Int. Cl.: B60K 35/00, B60K 37/04, G06F 3/02

(54) **Automotive human-machine interface**
Mensch-Maschine Schnittstelle für ein Kraftfahrzeug
Interface Homme-Machine pour un véhicule automobile

(43) Date of publication of application: 06.05.2009
(73) Proprietor: C.R.F. Società Consortile per Azioni, 10043 Orbassano (Torino) (IT)
(72) Inventor: Demontis, Salvatore, c/o C.R.F. Società Consortile per Azioni, 10043 Orbassano (IT); Masoero, Giorgio, c/o C.R.F. Società Consortile per Azioni, 10043 Orbassano (IT); Varalda, Giuseppe, c/o C.R.F. Società Consortile per Azioni, 10043 Orbassano (IT)
(74) Representative: Bergadano, Mirko

(56) References cited:
- WO-A-00/34105
- DE-A1- 10 346 069
- DE-A1-102004 031 659
- DE-A1-102005 045 607
- US-A1- 2005 021 190
- US-A1- 2005 122 317

## Description

The present invention concerns an automotive human-machine interface.

The present invention finds advantageous, although not exclusive, application on road motor vehicles, such as cars, vans, lorries, etc., to which the treatment that follows shall make reference, but without loss of generality.

As is known, in the automotive field, the design of the functions of a motor vehicle is increasingly oriented to solutions characterized by high interactivity between driver, passengers, motor vehicle and the outside world.

In particular, the control that the driver and passengers can exert over the functions of the motor vehicle, such as control of the air-conditioning system, the audio system, etc., and over the interaction of the motor vehicle with the outside world, such as handling telephone calls made with a personal mobile phone and the interference between this and listening to music, the management of information arriving from the onboard computer, interaction with the navigator, etc., is continually growing.

DE 10 2005 045 607 discloses such a control according to the preamble of claim 1.

In consequence, there is an increasingly felt need to equip vehicles with human-machine interfaces that render interaction between user and motor vehicle as simple and as immediate as possible, in order to limit driver distraction and so not compromise the safety of the occupants of the same motor vehicle and those of other motor vehicles whilst driving.

The object of the present invention is that of embodying a human-machine interface for a motor vehicle that satisfies the above-indicated need.

According to the present invention, a human-machine interface for a motor vehicle is embodied, as defined in the enclosed claims.

For a better understanding of the present invention, a preferred embodiment shall now be described, purely by way of non-limitative example and with reference to the enclosed drawings, where:
- Figures 1a and 1b schematically show the passenger compartment of a motor vehicle equipped with a human-machine interface according to the present invention,
- Figures 2a and 2b show the operating methods of the human-machine interface in Figures 1a and 1b, and
- Figures 3a, 3b, 3c and 4 show details of the invention's human-machine interface in greater detail.

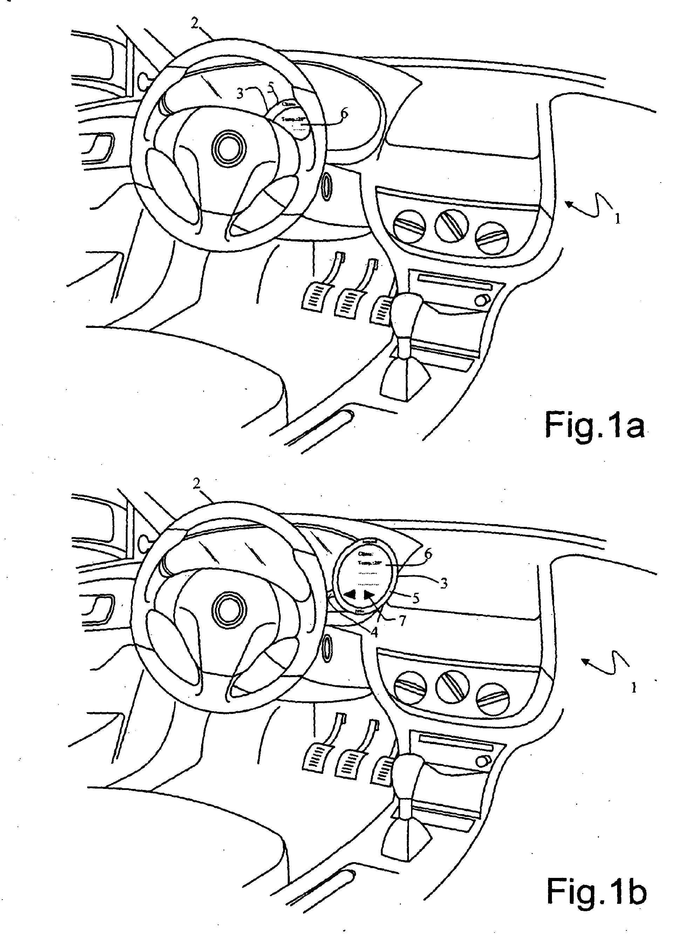

Figures 1a and 1b partially show the passenger compartment, indicated by reference numeral 1, of a motor vehicle equipped with a steering wheel 2 and a human-machine interface 3 according to the present invention for the control of functions carried out by various types of onboard electrical/electronic devices (not shown in the figures) such as, for example, electric actuators for power seats, air-conditioning system, infotelematics system comprising, amongst other things, a satellite navigation system, car audio system, system for receiving and making telephone calls via a personal mobile phone, system for sending and receiving e-mails, etc.

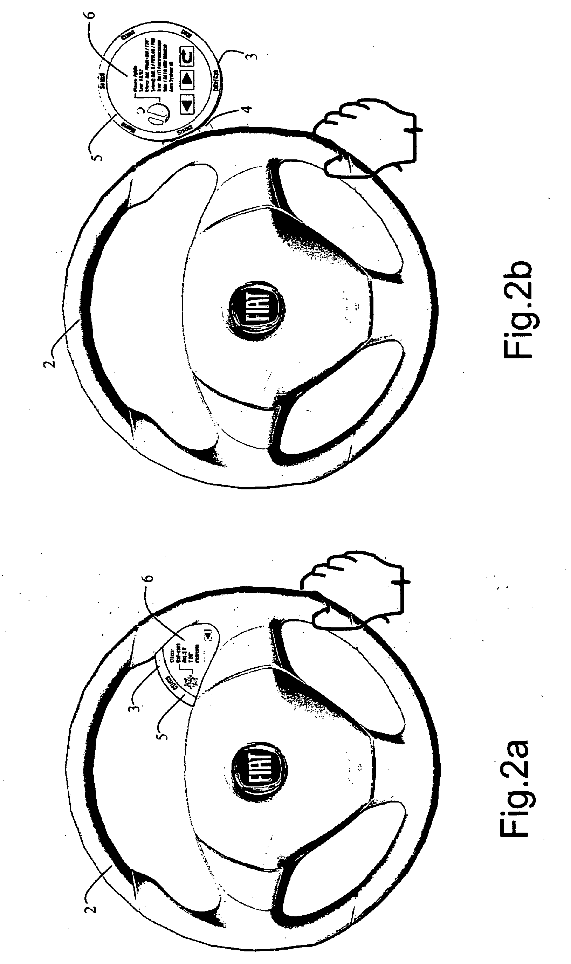

As shown in Figures 1a, 1b and 2b, the human-machine interface 3 comprises:
- a rotating selection device 5, in particular constituted by a substantially flat rotating ring, for selecting a series of predefined control functions, the names or abbreviations of which are printed and backlit on the ring itself, and
- a display unit 6 for the display of information and controls regarding the function selected each time via the rotating selection device 5.

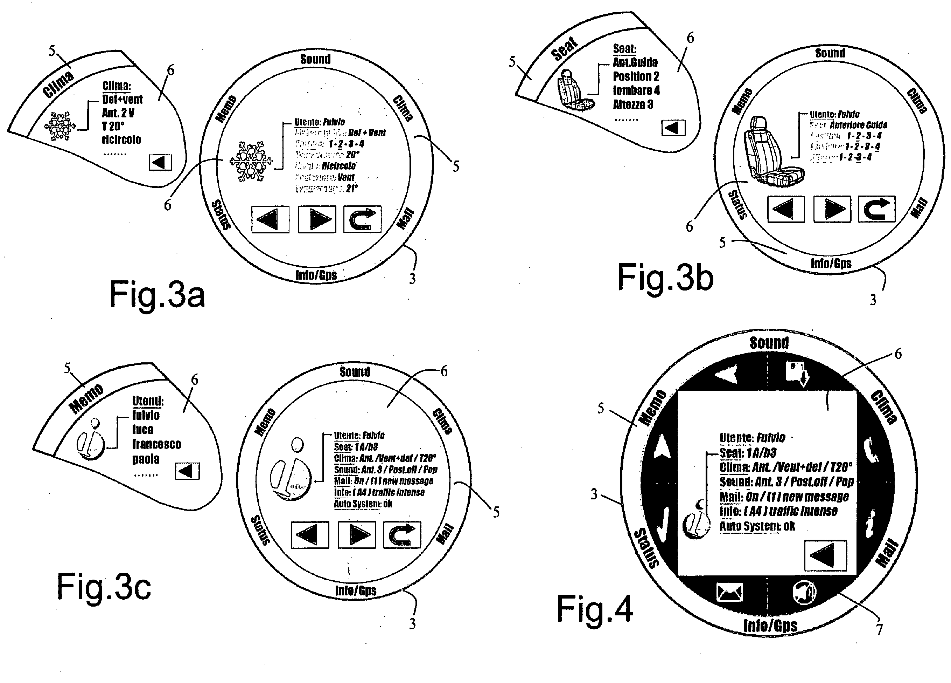

In a first embodiment shown in Figures 2a, 2b, 3a, 3b and 3c, the display unit 6 is formed by a TFT (Thin Film Transistor) touch-screen display of circular shape placed inside the rotating ring, while in a second embodiment shown in Figure 4, the display unit 6 is formed by a TFT display of generally square or rectangular shape placed inside the ring. In this second embodiment, a plurality of selection and rapid activation buttons 7 for predetermined functions, the icons of which are printed and backlit on the buttons themselves, are also provided between the display unit 6 and the rotating selection device 5.

In both embodiments, the human-machine interface 3 is also connected to an electronic unit (not shown), microprocessor-based for example, for operational control of the human-machine interface 3 and equipped with memory in which a software program is loaded that, when executed and on the basis of the actions taken by the driver on the human-machine interface 3 itself, as well as on the rotating selection device 5 and the buttons 7, controls the display of information and the controls related to the function selected each time, as shall be described in greater detail in the following.

The human-machine interface 3 is supported by a steering column switch unit, positioned behind the steering wheel 2 (from the driver's position), by means of a telescopic arm 4 for example, in such a way that it is movable between a first operational position in which it is partially hidden by the steering wheel 2, thus resulting only partially visible and usable by the driver, and a second operational position in which it sticks out from the steering wheel 2, thus becoming completely visible and usable by the driver. Furthermore, the human-machine interface 3 is coupled to the steering column switch unit in a manner such that when set in both the first and the second operational positions, it can perform a series of movements via which the driver can scroll through the information and select and activate the controls regarding the function selected each time. To this end, the human-machine interface 3 comprises at least one sensor for the detection of such movements and the transmission of signals containing information regarding said movements to the electronic control unit containing the software program that, based on this information, controls the scrolling of information as well as the selection and activation of the controls regarding the function selected each time.

The human-machine interface 3 is also configured in a manner to:
- allow the driver to only partially interact with it, allowing access to only a partial set of information and basic controls associated with the selected function when the human-machine interface 3 is in the first operational position, and to
- totally interact with it, allowing access to the complete set of information and controls associated with the selected function when the human-machine interface 3 is in the second operational position.

The placing of the human-machine interface 3 in an operational position in which it is partially hidden by the steering wheel, together with the fact that in this operational position the driver only has access to a partial set of information and basic controls associated with the selected function, significantly reduces driver distraction from the primary driving task, with consequent benefits in terms of driving safety.

In the examples shown in the figures, the information and controls regarding the function selected each time are displayed on the display unit 6 in the form of menus comprising a plurality of items (to which further submenus can be associated) and/or softkeys via which the driver can interact with the motor vehicle's onboard electrical/electronic devices or simply obtain information on various operational quantities regarding the selected function.

In particular, once the desired function is selected by rotating the selection device 5, scrolling through the items and/or softkeys in the relevant menu to perform the selection and activation of a specific item or softkey is carried out by the driver performing preset actions on the human-machine interface 3, for example, by briefly applying pressure on the human-machine interface 3 along the axis of the telescopic arm 4 to scroll through the items of the menu, briefly applying pressure on the human-machine interface 3 transversally to the axis of the telescopic arm, by briefly pulling the human-machine interface 3 towards the driver for example, to select the item on the selected menu, and instead exerting prolonged pressure on the human-machine interface 3 in this transversal direction to return to the previous screen or to the main screen.

As shown in Figures 3a, 3b, 3c and 4, the functions that can be selected via the rotating selection device 5 could, for example, regard the following:
- air-conditioning system (Clima),
- car audio system (Sound),
- satellite navigation system (Info/Gps),
- e-mail send and receive system (Mail), and
- supply of summary information of the current status of all of the above-indicated onboard systems (Status).

The functions that can be selected via the buttons 7 can, for example, be related to:
- saving loaded data,
- sideways and vertical selection and confirmation of an item/softkey on a menu,
- activation of the e-mail send and receive system,
- volume muting of the car audio system,
- supply of summary information on the current status of all the above-indicated onboard systems, and
- making/accepting and hanging up a telephone call.

Figures 3a, 3b, 3c and 4 also show examples of menus associated respectively with control of the air-conditioning system, control of seat positions and control of the summary status display menu.

As shown in Figures 1a and 2a, the human-machine interface 3 is configured such that when it is in the first operational position, in which it is partially hidden by the steering wheel 2 and therefore only partially visible to the driver, a rotation of the selection device 5 corresponds to the illumination of just the function that is visible to the driver on the rotating selection device 5 and the display, in the area of the display unit 6 visible to the driver, of a subset of the items of the menu associated with the selected function, in particular items regarding the main information and controls.

Independently of its embodiment, the human-machine interface 3 can be configured such that the functions that can be selected by the driver via the rotating selection device 5 can only be selected when the interface 3 is in the first operational position, or in both operational positions.

Finally, it should be noted that the items of the menus and/or graphic symbols shown in the figures constitute a simple, non-limitative example and can vary according to the functions that the manufacturer wishes to make available to the driver.

The main advantage of the invention's human-machine interface is that of allowing the driver of the motor vehicle, when driving, to set and control a plurality of functions of the onboard systems with minimum driving distraction. In this way, it is possible to guarantee greater safety for the occupants of the motor vehicle itself and of other motor vehicles whilst driving.

Lastly, it is clear that modifications and changes can be made to the human-machine interface described and shown herein without leaving the scope of protection of the present invention, as defined in the enclosed claims.

For example, the telescopic arm could be substituted by any other type of mechanism that allows the human-machine interface 3 to perform movements similar to those previously described.

Furthermore, the human-machine interface could be placed in any other point of the motor vehicle's passenger compartment, for example, in a specially provided seating on the dashboard, where the onboard instruments are also housed, and be movable between a retracted position in which partially projects from said seating in a manner that renders the selected function and the partial set of information and controls associated with the selected function visible to the user, and an extracted position in which it completely sticks out from said seating in a manner that renders the selected function and the complete set of information and controls associated with the selected function visible to the user.

The human-machine interface could also be configured in such a way that it could be arranged in a first operational configuration in which it is only partially visible to the user, and in a second operational configuration in which it is completely visible to the user, even without being configured to be movable between the first and the second operational configurations.

## Claims

1. Automotive human-machine interface (3), comprising:
• means of selection and activation (5) of functions that can be activated by a user,
• means of display (6) of a selected function and of information and controls associated with the selected function,
configured in such a way that it can be arranged,
• in a first operational configuration in which it is only partially visible to the user, and
• in a second operational configuration in which it is completely visible to the user,
and **characterized in that** it is also configured in such a way as to render the following visible to the user:
• the selected function and a partial set of the information and controls associated with the selected function, in the first operational configuration, and
• the selected function and the complete set of information and controls associated with the selected function, in the second operational position.

2. Automotive human-machine interface (3) according to claim 1, **characterized in that** it is also configured in such way as to render additional functions that can be selected by the user, visible to the user in the second operational configuration.

3. Automotive human-machine interface (3) according to claim 1 or 2, **characterized in that** it is also configured in such way as to hide the other functions that can be selected by the user from the user's view, in the first operational configuration.

4. Automotive human-machine interface (3) according to any of the previous claims, **characterized in that** it is also configured in such a way as to perform, at least in the first operational configuration, movements to scroll through the information and to select and activate controls regarding the selected function.

5. Automotive human-machine interface (3) according to claim 4, in which said movements comprise a displacement in a first direction and at least one displacement in a second direction, transversal to the first direction.

6. Interface (3) according to claim 5, in which said means of selection and activation are configured to:
• detect said displacement in said first direction,
• scroll through the information on the basis of said displacement in said first direction,
• detect said displacement in said second direction transversal to said first direction, and
• activate the controls associated with the selected function on the basis of said displacement in said second direction.

7. Automotive human-machine interface (3) according to any of the previous claims, **characterized in that** it is configured in such a way that it is moveable between:
• a first operational position corresponding to said first operational configuration, and
• a second operational position corresponding to said second operational configuration.

8. Automotive human-machine interface (3) according to any of the previous claims, in which said means of selection and activation (5) comprise a rotating selection device (5).

9. Automotive human-machine interface (3) according to claim 8, in which said rotating selection device (5) comprises a substantially flat rotating ring on which characters or icons indicating the selectable functions are printed and backlit.

10. Automotive human-machine interface (3) according to any of the previous claims, in which said means of display (6) comprise a circular-shaped display of the Thin Film Transistor touch-screen type.

11. Automotive human-machine interface (3) according to any of the previous claims, in which said means of display (6) comprise:
• a square or rectangular-shaped display of the Thin Film Transistor type, and
• a plurality of selection and rapid-activation buttons (7) for the selection and activation of said controls associated with the selected function.

12. Automotive human-machine interface (3) according to claim 10, in which said circular-shaped display is placed inside said rotating selection device (5).

13. Automotive human-machine interface (3) according to claim 11, in which said square or rectangular-shaped display and said plurality of selection and rapid-activation buttons (7) are arranged inside said rotating selection device (5).

14. Interface (3), according to claims 10 and 12, in which said means of display comprises a plurality of softkey elements for the scrolling and selection of said controls associated with the selected function.

15. Motor vehicle comprising an automotive human-machine interface (3) according to any of the previous claims, **characterized in that** said automotive human-machine interface (3) is supported in a way such that, in said first operational configuration, it is partially hidden by an element (2) present inside the passenger compartment of said motor vehicle.

16. Motor vehicle according to claim 15, in which said element is a steering wheel (2).

## Patentansprüche

1. Mensch-Maschine Schnittstelle für ein Fahrzeug (3), aufweisend:
Mittel zum Auswählen und Aktivieren (5) von Funktionen, die von einem Benutzer aktiviert werden können,
Mittel zum Anzeigen (6) einer ausgewählten Funktion und von mit der ausgewählten Funktion assoziierten Information und Bedienelementen,
derart gestaltet, dass sie eingerichtet werden kann
in einer ersten Bedienkonfiguration, in der sie für den Benutzer nur teilweise sichtbar ist, und
in einer zweiten Bedienkonfiguration, in der sie für den Benutzer vollständig sichtbar ist,
und **dadurch gekennzeichnet, dass** sie auch so gestaltet ist, dass sie das Folgende für den Benutzer sichtbar macht:
in der ersten Bedienkonfiguration, die ausgewählte Funktion und eine Teilmenge der mit der ausgewählten Funktion assoziierten Information und Bedienelemente, und
in der zweiten Bedienkonfiguration, die ausgewählte Funktion und eine vollständige Menge der mit der ausgewählten Funktion assoziierten Information und Bedienelemente.

2. Mensch-Maschine Schnittstelle für ein Fahrzeug (3) nach Anspruch 1, **dadurch gekennzeichnet, dass** sie auch so gestaltet ist, dass sie für den Benutzer zusätzliche, durch den Benutzer auswählbare Funktionen in der zweiten Bedienkonfiguration sichtbar macht.

3. Mensch-Maschine Schnittstelle für ein Fahrzeug (3) nach Anspruch 1 oder 2, **dadurch gekennzeichnet, dass** sie auch so gestaltet ist, dass sie die anderen Funktionen, die vom Benutzer ausgewählt werden können, in der ersten Bedienkonfiguration aus dem Blickfeld des Benutzers ausblendet.

4. Mensch-Maschine Schnittstelle für ein Fahrzeug (3) nach einem der vorangehenden Ansprüche, **dadurch gekennzeichnet, dass** sie auch gestaltet ist, zumindest in der ersten Bedienkonfiguration Bewegungen auszuführen, um durch die Information zu scrollen und Bedienelemente bezüglich der aktivierten Funktion auszuwählen und zu aktivieren.

5. Mensch-Maschine Schnittstelle für ein Fahrzeug (3) nach Anspruch 4, in der die Bewegungen eine Versetzung in einer ersten Richtung und mindestens eine Versetzung in einer zweiten Richtung, senkrecht zu der ersten Richtung, enthalten.

6. Schnittstelle (3) nach Anspruch 5, in der die Mittel zum Auswählen und Aktivieren gestaltet sind zum:
Detektieren des Versetzens in die erste Richtung,
Scrollen durch die Information auf Grundlage des Versetzens in die erste Richtung,
Detektieren des Versetzens in die zweite Richtung, senkrecht zu der ersten Richtung, und
Aktivieren der mit der ausgewählten Funktion assoziierten Bedienelemente auf Grundlage des Versetzens in die zweite Richtung.

7. Mensch-Maschine Schnittstelle für ein Fahrzeug (3) nach einem der vorangehenden Ansprüche, **dadurch gekennzeichnet, dass** sie auch so eingerichtet, dass sie bewegbar ist zwischen:
einer ersten Bedienposition, die der ersten Bedienkonfiguration entspricht, und
einer zweiten Bedienposition, die der zweiten Bedienkonfiguration entspricht.

8. Mensch-Maschine Schnittstelle für ein Fahrzeug (3) nach einem der vorangehenden Ansprüche, in welcher die Mittel zum Auswählen und Aktivieren (5) eine drehbare Auswählvorrichtung aufweisen.

9. Mensch-Maschine Schnittstelle für ein Fahrzeug (3) nach Anspruch 8, in welcher die drehbare Auswählvorrichtung (5) einen im Wesentlichen flachen drehbaren Ring aufweist, auf dem die auswählbaren Funktionen anzeigende Zeichen oder Symbole aufgedruckt und von hinten beleuchtet sind.

10. Mensch-Maschine Schnittstelle für ein Fahrzeug (3) nach einem der vorangehenden Ansprüche, in welcher die Mittel zum Anzeigen (6) eine kreisförmige Anzeige vom TFT-Touchscreen-Typ aufweisen.

11. Mensch-Maschine Schnittstelle für ein Fahrzeug (3) nach einem der vorangehenden Ansprüche, in welcher die Mittel zum Anzeigen (6) aufweisen:
eine quadratische oder rechteckige Anzeige vom TFT-Touchscreen-Typ,
eine Mehrzahl von Auswahl- und Schnellaktivierungstasten (7) zum Auswählen und Aktivieren der mit der ausgewählten Funktion assoziierten Bedienelemente.

12. Mensch-Maschine Schnittstelle für ein Fahrzeug (3) nach Anspruch 10, in welcher die kreisförmige Anzeige innerhalb der drehbaren Auswählvorrichtung (5) angeordnet ist.

13. Mensch-Maschine Schnittstelle für ein Fahrzeug (3) nach Anspruch 11, in welcher die quadratische oder rechteckförmige Anzeige und die Mehrzahl von Auswahl- und Schnellaktivierungstasten (7) innerhalb der drehbaren Auswählvorrichtung (5) angeordnet sind.

14. Schnittstelle (3), gemäß der Ansprüche 10 und 12, in welcher die Mittel zum Anzeigen eine Mehrzahl von dargestellten Tastenelementen zum Scrollen und Auswählen der mit der ausgewählten Funktion assoziierten Bedienelemente aufweisen.

15. Kraftfahrzeug aufweisend eine Mensch-Maschine Schnittstelle für ein Fahrzeug (3) nach einem der vorangehenden Ansprüche, **dadurch gekennzeichnet, dass** die Mensch-Maschine Schnittstelle für ein Fahrzeug (3) derart gestützt ist, dass sie in der ersten Bedienkonfiguration teilweise durch ein im Fahrgastraum des Kraftfahrzeugs vorhandenes Element (2) verdeckt ist.

16. Kraftfahrzeug nach Anspruch 15, bei welchem das Element (2) ein Lenkrad (2) ist.

## Revendications

1. Interface homme-machine pour un véhicule automobile (3), comprenant :
- des moyens de sélection et d'activation (5) de fonctions pouvant être activées par un utilisateur,
- des moyens d'affichage (6) d'une fonction sélectionnée et des informations et commandes associées à la fonction sélectionnée,
configurée de telle sorte qu'elle peut être disposée
- dans une première configuration opérationnelle dans laquelle elle n'est que partiellement visible de l'utilisateur, et
- dans une seconde configuration opérationnelle dans laquelle elle est entièrement visible par l'utilisateur,
et **caractérisée en ce qu'**elle est également configurée de telle manière qu'elle rend ce qui suit visible par l'utilisateur :
- la fonction sélectionnée et un groupe partiel des informations et commandes associées à la fonction sélectionnée, dans la première configuration opérationnelle, et
- la fonction sélectionnée et le groupe complet d'informations et de commandes associées à la fonction sélectionnée, dans la seconde position opérationnelle.

2. Interface homme-machine pour véhicule automobile (3) selon la revendication 1, **caractérisée en ce qu'**elle est également configurée de telle manière qu'elle rend des fonctions additionnelles pouvant être sélectionnées par l'utilisateur visibles par l'utilisateur dans la seconde configuration opérationnelle.

3. Interface homme-machine pour véhicule automobile (3) selon la revendication 1 ou 2, **caractérisée en ce qu'**elle est également configurée de telle manière qu'elle dissimule les autres fonctions pouvant être sélectionnées par l'utilisateur de la vue de l'utilisateur, dans la première configuration opérationnelle.

4. Interface homme-machine pour véhicule automobile (3) selon l'une quelconque des revendications précédentes, **caractérisée en ce qu'**elle est également configurée de telle manière qu'elle exécute, au moins dans la première configuration opérationnelle, des déplacements pour faire défiler les informations et pour sélectionner et activer des commandes concernant la fonction sélectionnée.

5. Interface homme-machine pour véhicule automobile (3) selon la revendication 4, dans laquelle lesdits déplacements comprennent un déplacement dans une première direction et au moins un déplacement dans une seconde direction, transversale à la première direction.

6. Interface (3) selon la revendication 5, dans laquelle lesdits moyens de sélection et d'activation sont configurés pour :
- détecter ledit déplacement dans ladite première direction,
- faire défiler les informations en fonction dudit déplacement dans ladite première direction,
- détecter ledit déplacement dans ladite seconde direction transversale à ladite première direction, et
- activer les commandes associées à la fonction sélectionnée en fonction dudit déplacement dans ladite seconde direction.

7. Interface homme-machine pour véhicule automobile (3) selon l'une quelconque des revendications précédentes, **caractérisée en ce qu'**elle est configurée de telle manière qu'elle puisse se déplacer enture :
- une première position opérationnelle correspondant à ladite première configuration opérationnelle, et
- une seconde position opérationnelle correspondant à ladite seconde configuration opérationnelle.

8. Interface homme-machine pour véhicule automobile (3) selon l'une quelconque des revendications précédentes, dans laquelle lesdits moyens de sélection et d'activation (5) comprennent un dispositif de sélection rotatif (5).

9. Interface homme-machine pour véhicule automobile (3) selon la revendication 8, dans laquelle ledit dispositif de sélection rotatif (5) comprend une bague rotative sensiblement plate sur laquelle des caractères ou icônes indiquant les fonctions pouvant être sélectionnées sont imprimées et rétro-éclairées.

10. Interface homme-machine pour véhicule automobile (3) selon l'une quelconque des revendications précédentes, dans laquelle lesdits moyens d'affichage (6) comprennent un écran de forme circulaire du type écran tactile à matrice active.

11. Interface homme-machine pour véhicule automobile (3) selon l'une quelconque des revendications précédentes, dans laquelle lesdits moyens d'affichage (6) comprennent :
- un écran de forme carrée ou rectangulaire du type à matrice active, et
- une pluralité de boutons de sélection et d'activation rapide (7) pour la sélection et l'activation desdites commandes associées à la fonction sélectionnée.

12. Interface homme-machine pour véhicule automobile (3) selon la revendication 10, dans laquelle ledit écran de forme circulaire est placé à l'intérieur dudit dispositif de sélection rotatif (5).

13. Interface homme-machine pour véhicule automobile (3) selon la revendication 11, dans laquelle ledit écran de forme carrée ou rectangulaire et ladite pluralité de boutons de sélection et d'activation rapide (7) sont disposés à l'intérieur dudit dispositif de sélection rotatif (5).

14. Interface (3), selon les revendications 10 et 12, dans laquelle lesdits moyens d'affichage comprennent une pluralité d'éléments touche programmable pour le défilement et la sélection desdites commandes associées à la fonction sélectionnée.

15. Véhicule motorisé comprenant une interface homme-machine pour véhicule automobile (3) selon l'une quelconque des revendications précédentes, **caractérisé en ce que** ladite interface homme-machine pour véhicule automobile (3) est supportée de telle manière que, dans ladite première configuration opérationnelle, elle soit partiellement dissimulée par un élément (2) présent à l'intérieur du compartiment passager dudit véhicule motorisé.

16. Véhicule motorisé selon la revendication 15, dans lequel ledit élément est un volant de direction (2).
